# FASCICULE DE BREVET EUROPEEN

(11) **EP 1 807 254 B1**
(45) Date de publication et mention de la délivrance du brevet: **29.12.2010**
(21) Numéro de dépôt: 05815716.5
(22) Date de dépôt: 25.10.2005
(51) Int. Cl.: B29C 45/14, F16B 33/00

(54) **DISPOSITIF DE FOURNITURE DE MATERIAU PATEUX**
VORRICHTUNG ZUR ZUFUHR ZÄHFLÜSSIGER MATERIALIEN
DEVICE FOR SUPPLYING PASTY MATERIALS

(30) Priorité: 03.11.2004 FR 0452508
(43) Date de publication de la demande: 18.07.2007
(73) Titulaire: AIRBUS OPERATIONS (S.A.S), 31060 Toulouse (FR)
(72) Inventeur: CASETEUBLE, Hervé, F-44400 Reze (FR)
(74) Mandataire: Schmit, Christian Norbert Marie
(86) Numéro de dépôt international: PCT/FR2005/050893
(87) Numéro de publication internationale: WO 2006/048570

(56) Documents cités:
- EP-A- 0 181 483
- DE-A1- 2 815 653
- DE-C- 976 151
- GB-A- 818 246
- US-A- 3 238 287
- US-A- 3 440 313
- US-A- 3 581 365
- US-A- 5 322 381
- US-A- 5 458 836
- PATENT ABSTRACTS OF JAPAN vol. 010, no. 249 (M-511), 27 août 1986 (1986-08-27) & JP 61 079610 A (NIPPON SUEEJI KOGYO KK), 23 avril 1986 (1986-04-23)

## Description

La présente invention concerne un dispositif de fourniture de matériau pâteux tel que matériau d'enrobage et notamment mastic notamment pour l'enrobage de dispositifs de fixation.

Les matériaux d'enrobage tels que les mastics silicones ou polyuréthanes sont des matériaux collants, et qui, après polymérisation, deviennent extrêmement difficiles à décoller pour le nettoyage des outils.

En outre, dans le cadre d'une utilisation de ces matériaux pour enrober des éléments de fixation tels que des têtes de boulons, des outils d'enrobage précis doivent être réalisés pour éviter les coulures de produit et des défauts d'aspect ou d'étanchéité.

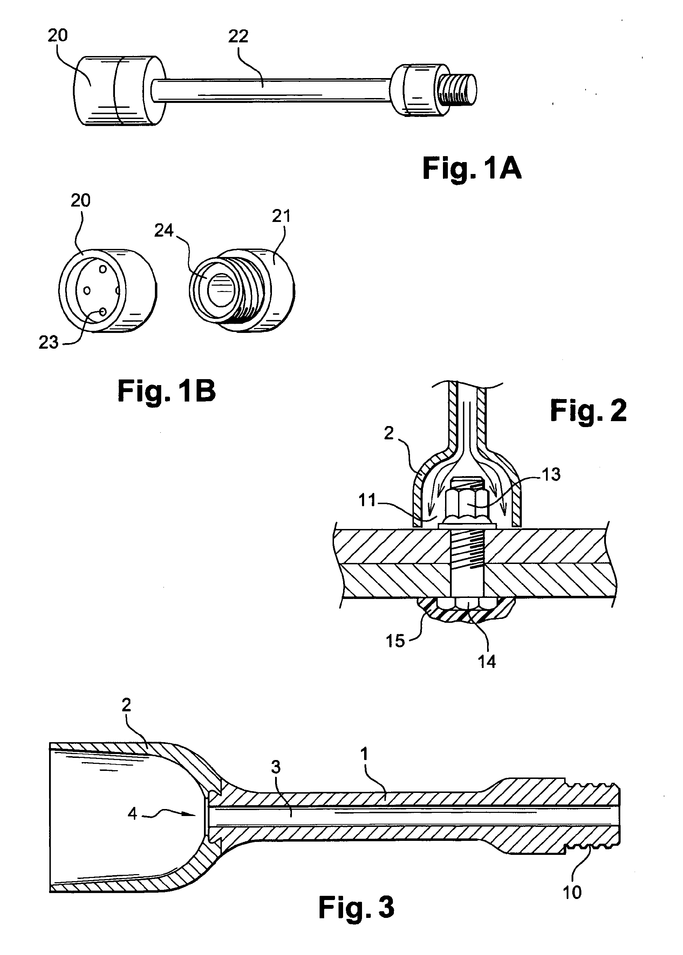

Les outils d'enrobage connus comportent des dispositifs à buses, se montant sur des pistolets extrudeur, pourvues d'un chambrage constitué par une coupelle cylindrique munie de trous de diffusion du produit. Un exemple de réalisation de l'art antérieur est donné en figures 1A et 1B pour une coupelle de l'ordre d'une quinzaine de millimètres de diamètre comportant des trous de l'ordre de 1 mm de diamètre.

Cette coupelle est vissée sur un tube d'amenée du produit et permet de coiffer la fixation à enrober puis d'injecter le produit d'enrobage sur la fixation.

Pour réaliser l'isolation et l'enrobage de l'élément de fixation, un opérateur vient coiffer l'élément de fixation à l'aide de la buse et déclenche l'injection du matériau d'isolation dans la coupelle autour de l'élément de fixation.

Le nettoyage des buses nécessite des solvants puissants onéreux et polluants et l'utilisation de pinceaux ou autres outils notamment pour déboucher les trous des buses.

Les buses sont généralement réalisées en aluminium, sont vissées sur des embouts eux-mêmes en aluminium et ont des dimensions adaptées aux fixations à enrober, une buse particulière correspondant à chaque diamètre de fixation.

insert page 2a La présente invention a pour but de proposer des buses d'enrobage plus aisées d'emploi que les buses de l'art antérieur, faciles à nettoyer sans utiliser de solvants et modulaires.

Pour ce faire, la présente invention concerne principalement un dispositif de fourniture de matériau pâteux selon la revendication 1

L'utilisation d'une ouverture centrale permet un nettoyage aisé du dispositif et la forme en cloche de la buse permet une répartition plus homogène du produit d'enrobage.

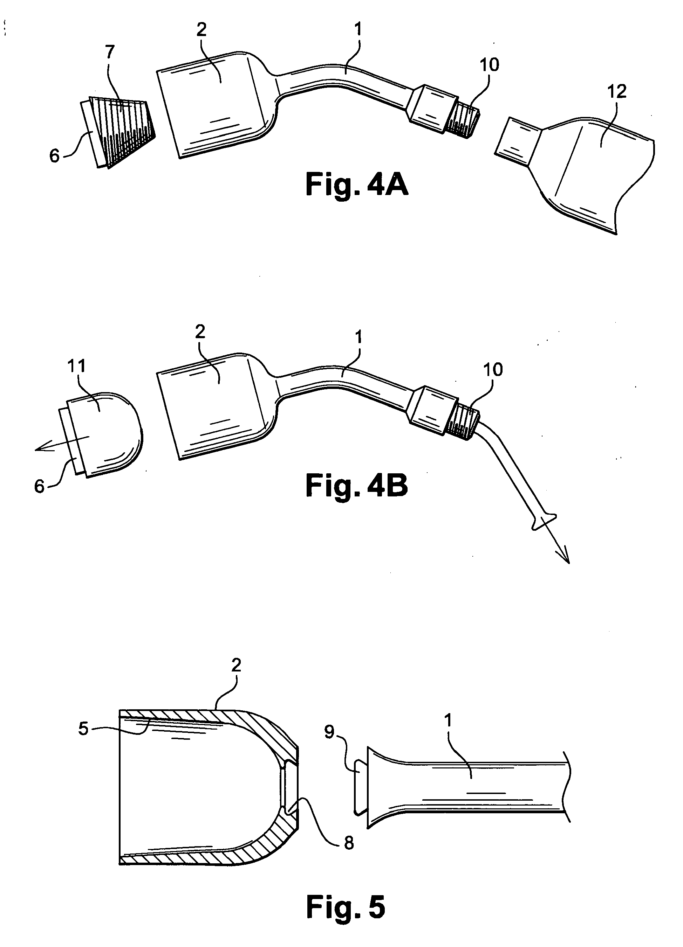

D'autres aspects et avantages de l'invention seront mieux compris à la lecture de la description qui va suivre d'un exemple de réalisation de l'invention non limitatif en référence aux figures qui représentent:
en figures 1A et 1B:des vues de côté et en perspective d'un embout et d'une buse de l'art antérieur;
en figure 2: une vue en coupe d'une buse selon l'invention autour d'un dispositif de fixation en cours d'enrobage;
en figure 3:une vue en coupe d'un dispositif selon l'invention;
en figures 4A et 4B:le dispositif de la figure 3 avant et pendant son nettoyage;
en figure 5: un détail du dispositif de la figure 3 représentant la fixation de la buse sur l'embout.

Le dispositif de fourniture de matériau pâteux de l'art antérieur comprend un embout 22 sur lequel se visse une buse en deux parties 20, 21, la première partie 20 comprenant une coupelle et des trous 23 de distribution du produit pâteux, ces trous étant en communication avec une chambre de distribution 24 réalisée dans une seconde partie de la buse et fixée à l'embout 22.

Comme pour l'art antérieur, le dispositif selon l'invention décrit en figure 3 comporte un embout 1 d'amenée du matériau et une buse d'enrobage 2.

Notamment le document US 5 322 361 décrit une buse connue prolongée par un tube de fixation sur un conteneur.

Le document EP 0 181 483 décrit pour sa part une buse munie d'un logement hémisphérique en face d'une ouverture centrale de la buse, un applicateur venant s'appuyer dans le logement hémisphérique pour distribuer le matériau pâteux dans l'ouverture centrale.

Contrairement au système complexe de trous répartis sous une coupelle et de chambre de distribution de l'art antérieur, système risquant de se boucher facilement, le dispositif selon l'invention comporte une buse 2 pourvue d'une ouverture centrale 4 amenant le matériau pâteux sur l'objet à enrober et l'embout comporte un canal 3 d'amenée du matériau pâteux se terminant à une première extrémité de l'embout dans l'ouverture centrale 4 de la buse 2.

L'embout comporte une seconde extrémité 10 de fixation sur un pistolet extrudeur 12 par vissage ou tout autre moyen.

Pour enrober des objets tels que des dispositifs de fixation vis 14 écrou 13 comme représenté en figure 2, la buse est conformée en cloche autour de l'ouverture centrale 4.

En outre, la surface interne 5 de la buse est une surface continue et lisse permettant ainsi une meilleure répartition du produit d'enrobage que la buse de l'art antérieur qui comporte un fond plan et une couronne annulaire cylindrique.

En outre, le produit d'enrobage n'adhère pas à la surface continue et lisse de la buse selon l'invention.

Dans cette même optique, le matériau utilisé pour réaliser la buse et l'embout est avantageusement un polyéthylène sur lequel le matériau pâteux d'enrobage et notamment un mastic polyuréthane n'adhère pas.

Comme représenté en figures 4A et 4B, le dispositif selon l'invention comporte, pour son nettoyage, selon une première variante un outil de nettoyage comportant un bouchon de démoulage 6 s'insérant dans la buse 2 et dont la surface externe 7 est adaptée pour adhérer au matériau pâteux 11 une fois polymérisé.

Selon la figure 4A, une fois l'enrobage terminé, l'opérateur retire l'embout 1 du pistolet extrudeur 12 et insère le bouchon 6 dans la buse.

L'insertion du bouchon fait refluer une partie du produit encore dans le dispositif par la seconde extrémité de l'embout.

Une fois le produit polymérisé il suffit, pour nettoyer la buse et l'embout, de retirer le bouchon qui emporte avec lui le produit logé dans la buse et, de tirer sur le résidu de matériau sortant de l'extrémité 10 de l'embout 1.

Pour faciliter l'accrochage du matériau, la surface externe 7 du bouchon de démoulage 6 selon l'exemple est filetée pour adhérer au matériau pâteux 11.

Selon ce principe, on insère le bouchon de démoulage 6 dans la buse 2 avant polymérisation du matériau pâteux, on laisse polymériser le matériau et on entrait le matériau en sortant le bouchon 6 de la buse.

Une autre méthode de nettoyage selon l'invention consiste, une fois le mastic polymérisé, à raccorder l'extrémité 10 de l'embout à une arrivée d'air comprimé, par exemple un robinet d'arrêt d'air comprimé. Pour ce faire, l'arrivée d'air comporte une extrémité munie de moyens de fixation étanches pour l'extrémité 10 de l'embout, notamment un taraudage complémentaire de l'extrémité filetée de l'extrémité 10 pour coopérer avec cette extrémité et réaliser une liaison étanche.

Une fois l'extrémité 10 vissée sur le robinet, on ouvre le robinet de façon à ce qu'on insuffle de l'air comprimé dans l'embout afin que cet air exerce une pression sur le mastic polymérisé et le décolle des parois de l'embout et de la buse et on sort à la main le mastic polymérisé de la buse et de l'embout, le mastic une fois décollé pouvant aisément être sorti de la buse à la main.

Dans le cadre de l'invention, l'embout 1 est susceptible de recevoir des buses 2 de tailles différentes pour permettre l'enrobage de fixations 13, 14 de différentes tailles.

Pour faciliter le remplacement des buses, l'embout 1 et les buses 2 sont pourvus de moyens de fixation complémentaires encliquetables 8, 9.

Selon l'exemple de la figure 5, les moyens de fixation encliquetables 8, 9 comportent un rebord annulaire 9 entourant la première extrémité de l'embout 1 et une gorge circulaire 8 autour de l'ouverture centrale 4 de la buse 2 et il suffit de tirer sur la buse pour la désolidariser de l'embout puis d'insérer à force l'embout dans une autre buse pour pouvoir enrober d'autres fixations.

L'invention ne se limite pas au dispositif décrit comme exemple et notamment le bouchon peut comporter un lien pour se fixer à la buse ou comporter des stries au lieu d'un filetage externe.

Le dispositif selon l'invention est simple à réaliser peu onéreux et peu susceptible de se boucher contrairement au dispositif de l'art antérieur.

## Revendications

1. Dispositif de fourniture de matériau pâteux comportant un embout (1) d'amenée du matériau et une buse d'enrobage (2), l'embout comportant un canal (3) d'amenée du matériau pâteux se terminant à une première extrémité de l'embout dans une ouverture centrale (4) de la buse (2), **caractérisé en ce que** l'embout (1) est adapté à recevoir des buses (2) de tailles différentes, l'embout (1) et les buses (2) étant pourvus de moyens de fixation complémentaires encliquetables.

2. Dispositif selon la revendication 1 **caractérisé en ce que** la buse est conformée en cloche autour de l'ouverture centrale (4).

3. Dispositif selon la revendication 1 ou 2 **caractérisé en ce que** la surface interne (5) de la buse est une surface continue.

4. Dispositif selon l'une quelconque des revendications précédentes **caractérisé en ce que** les moyens de fixation encliquetables (8, 9) comportent un rebord annulaire (9) entourant la première extrémité de l'embout (1) et une gorge circulaire (8) autour de l'ouverture centrale (4) de la buse (2).

5. Dispositif selon l'une quelconque des revendications précédentes **caractérisé en ce que** l'embout comporte une seconde extrémité (10) de fixation sur un pistolet extrudeur (12).

6. Dispositif selon l'une quelconque des revendications précédentes **caractérisé en ce qu'**il comporte un outil de nettoyage comportant un bouchon de démoulage (6) s'insérant dans la buse (2) et dont la surface externe (7) est adaptée pour adhérer au matériau pâteux (11) une fois polymérisé.

7. Dispositif selon la revendication 6 **caractérisé en ce que** la surface externe (7) du bouchon de démoulage (6) est filetée pour adhérer au matériau pâteux (11).

## Claims

1. Device for delivering a pasty material, comprising a material feed connector (1) and a coating nozzle (2), the connector comprising a pasty material feed channel (3) that ends at a first end of the connector in a central opening (4) of the nozzle (2), the device being **characterized in that** the connector (1) is designed to accept nozzles (2) of various sizes, the connector (1) and the nozzles (2) being provided with mating snap-on attachment means.

2. Device according to Claim 1, **characterized in that** the nozzle is bell-shaped around the central opening (4).

3. Device according to Claim 1 or 2, **characterized in that** the inner surface (5) of the nozzle is a continuous surface.

4. Device according to any one of the preceding claims, **characterized in that** the snap-on attachment means (8, 9) comprise an annular lip (9) surrounding the first end of the connector (1) and a circular groove (8) around the central opening (4) of the nozzle (2).

5. Device according to any one of the preceding claims, **characterized in that** the connector comprises a second end (10) for attachment to an extruder gun (12).

6. Device according to any one of the preceding claims, **characterized in that** it comprises a cleaning tool comprising a demoulding plug (6) that fits into the nozzle (2) and has an outer surface (7) designed to adhere to the pasty material (11) once polymerized.

7. Device according to Claim 6, **characterized in that** the outer surface (7) of the demoulding plug (6) is threaded in order to adhere to the pasty material (11).

## Patentansprüche

1. Vorrichtung zum Liefern eines pastösen Werkstoffs, die ein Werkstoffzufuhr-Anschlussstück (1) und eine Umhüllungsdüse (2) aufweist, wobei das Anschlussstück einen Zufuhrkanal (3) des pastösen Werkstoffs aufweist, der an einem Ende des Anschlussstücks in einer zentralen Öffnung (4) der Düse (2) endet, **dadurch gekennzeichnet, dass** das Anschlussstück (1) geeignet ist, um Düsen (2) unterschiedlicher Größen aufzunehmen, wobei das Anschlussstück (1) und die Düsen (2) mit einrastbaren komplementären Befestigungseinrichtungen versehen sind.

2. Vorrichtung nach Anspruch 1, **dadurch gekennzeichnet, dass** die Düse glockenförmig um die zentrale Öffnung (4) geformt ist.

3. Vorrichtung nach Anspruch 1 oder 2, **dadurch gekennzeichnet, dass** die Innenfläche (5) der Düse eine durchgehende Fläche ist.

4. Vorrichtung nach einem der vorhergehenden Ansprüche, **dadurch gekennzeichnet, dass** die einrastbaren Befestigungseinrichtungen (8, 9) eine ringförmige Randleiste (9), die das erste Ende des Anschlussstücks (1) umgibt, und eine Kreisnut (8) um die zentrale Öffnung (4) der Düse (2) aufweisen.

5. Vorrichtung nach einem der vorhergehenden Ansprüche, **dadurch gekennzeichnet, dass** das Anschlussstück ein zweites Ende (10) zur Befestigung an einer Extrusionspistole (12) aufweist.

6. Vorrichtung nach einem der vorhergehenden Ansprüche, **dadurch gekennzeichnet, dass** sie ein Reinigungswerkzeug aufweist, das einen Entformungsstopfen (6) aufweist, der in die Düse (2) eingefügt wird und dessen Außenfläche (7) geeignet ist, um am pastösen Werkstoff (11) zu haften, wenn er polymerisiert ist.

7. Vorrichtung nach Anspruch 6, **dadurch gekennzeichnet, dass** die Außenfläche (7) des Entformungsstopfens (6) ein Gewinde aufweist, um am pastösen Werkstoff (11) zu haften.
